(19) Europäisches Patentamt
European Patent Office
Office européen des brevets

(11) **EP 4 372 423 A1**

(12) **EUROPEAN PATENT APPLICATION**

(43) Date of publication:
**22.05.2024 Bulletin 2024/21**

(21) Application number: **22207563.2**

(22) Date of filing: **15.11.2022**

(51) International Patent Classification (IPC):
*G01S 19/51* (2010.01)   *G01S 19/14* (2010.01)

(52) Cooperative Patent Classification (CPC):
**G01S 19/51;** G01S 19/14

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Aptiv Technologies Limited**
**St. Michael (BB)**

(72) Inventor: **PAPIEROK, Sebastian**
**40882 Ratingen (DE)**

(74) Representative: **Bardehle Pagenberg**
**Partnerschaft mbB**
**Patentanwälte Rechtsanwälte**
**Prinzregentenplatz 7**
**81675 München (DE)**

(54) **METHOD AND APPARATUS FOR LOCALIZING ROAD USERS**

(57)   A computer-implemented method, an apparatus, and a computer program for localizing one or more road users. The method comprises: determining a first set of parameters associated with a position of the first road user, based on a first set of positioning data associated with the first road user, the first set of positioning data obtained by a first Global Navigation Satellite System (GNSS) receiver located at the first road user; determining, for each of one or more second road users, a second set of parameters associated with a position of the second road user, based on a corresponding second set of positioning data obtained by a corresponding second GNSS receiver located at the second road user; and determining, for each of the one or more second road users, a relative position of the second road user with respect to the first road user based on the first set of parameters and a corresponding second set of parameters.

Fig. 5

**Description**

**TECHNICAL FIELD**

The present application relates to the field of localization using a Global Navigation Satellite System (GNSS). More particularly, the present application relates to techniques for localizing road users. The term "road user" refers to any entity that participates in a road system, e.g., a vehicle (e.g., a vehicle moving on a road, a vehicle parked at a roadside), a person (e.g., a person riding/driving a vehicle, a person walking on a roadside or crossing a road), an infrastructure unit (e.g., a roadside unit (RSU)), etc.

**BACKGROUND**

Road safety and autonomous driving are important topics in the automotive industry. For some years now, more and more advanced driver assistance systems (ADAS) have been made available. ADAS help to recognize dangerous situations and even actively intervene in the driving situation when the driver has no time to react. For this purpose, surrounding information of a vehicle is collected with the aid of local sensor systems such as radar, lidar and camera. Vehicle-to-vehicle and vehicle-to-infrastructure communication (in short: Car2X communication) can be regarded as another sensor system that operates beyond line-of-sight.

Many Car2X applications require determining positions (i.e., relative positions) of nearby vehicles to recognize dangerous situations. For example, a relative position can be used for estimating a distance between a nearby vehicle and the local vehicle. Based on the estimated distance, advanced driver assistance service can be provided to the driver of the vehicle.

A simple approach to determine a relative position between two vehicles is to calculate a difference between the current positions of the two vehicles. A conventional method to obtain a current position is to use a GNSS receiver to obtain an estimated position based on signals from GNSS satellites. Then, the estimated positions are shared among the vehicles, e.g., via Car2X communication, to determine each other's relative positions. However, the estimated position determined by a low-cost GNSS receiver has only an accuracy of a few meters. In highly dynamic road situations, estimated positions determined by a low-cost GNSS receiver are not accurate enough for the determination of relative positions between different road users. On the other hand, precise systems (e.g., the Differential Global Positioning System (DGPS) or the (Real-Time Kinematic) RTK system) are too expensive and not every road user can be equipped with a GNSS receiver capable of using the precise systems.

Furthermore, the GNSS receivers are considered as a black box because the internal algorithms are generally unknown. In addition, the positions calculated in the GNSS receivers might be improved by certain methods (e.g., by applying a Kalman filter). This distorts common errors between two road users, so that an additional error might be introduced in the estimated relative position.

Currently, different alternative approaches are being developed to improve the accuracy of estimated relative positions of nearby vehicles. One approach is to obtain positioning data from GNSS satellites and determine a relative position based on pseudorange double differences (PRDDs) and using a least squares method. This approach is referred to as a PRDD-based approach in the following.

A drawback of the PRDD-based approach is that, positioning data from only common satellites (i.e., jointly visible to two road users) can be used in the determination of the PRDDs. In some use cases, a road user such as an infrastructure unit (e.g., a road side unit (RSU)) can see more satellites compared to another road user (such as a vehicle moving on a road). In those cases, the PRDD-based approach cannot use the positioning data from the extra satellites (which are not visible to the other road user).

Therefore, one goal of the present disclosure is to provide techniques to improve accuracy of estimated relative positions of road users. Further, it is also a goal of the present disclosure to ensure efficiency of the algorithm for improved relative position estimation, so that these techniques can be used in real-time (or almost real-time) to provide real-time (or almost real-time) relative position information to the road user.

**SUMMARY**

The invention is defined in the independent claims. Preferred embodiments are subject-matter of the dependent claims.

The following summarizes some aspects of the present disclosure to provide a basic understanding of the discussed technology. This summary is not an extensive overview of all contemplated features of the disclosure and is intended neither to identify key or critical elements of all aspects of the disclosure nor to delineate the scope of any or all aspects of the disclosure. Its sole purpose is to present some concepts of one or more aspects of the disclosure in summary form as a prelude to the more detailed description that is presented later.

For example, in an aspect of the disclosure, a computer-implemented method for localizing one or more road users comprises: determining a first set of parameters associated with a position of the first road user, based on a first set of positioning data associated with the first road user, the first set of positioning data obtained by a first Global Navigation Satellite System (GNSS) receiver located at the first road user; determining, for each of one or more second road users, a second set of parameters associated with a position of the second road user, based on a corresponding second set of positioning data obtained by a corresponding second GNSS receiver located at the second road user; and determining, for each of the one or more second road users, a relative position of the second road user with respect to the first road user based on the first set of parameters and a corresponding second set of parameters.

In an additional aspect of the disclosure, an apparatus comprises means for determining a first set of parameters associated with a position of the first road user, based on a first set of positioning data associated with the first road user, the first set of positioning data obtained by a first Global Navigation Satellite System (GNSS) receiver located at the first road user; means for determining, for each of one or more second road users, a second set of parameters associated with a position of the second road user, based on a corresponding second set of positioning data obtained by a corresponding second GNSS receiver located at the second road user; and means for determining, for each of the one or more second road users, a relative position of the second road user with respect to the first road user based on the first set of parameters and a corresponding second set of parameters.

In an additional aspect of the disclosure, a computer program comprises instructions which, when the program is executed by a computer, cause the computer to carry out a method in accordance with some aspects of this disclosure.

In an additional aspect of the disclosure, a non-transitory computer-readable medium has program code recorded thereon and the program code includes code for causing an apparatus to perform a method in accordance with some aspects of this disclosure.

Other aspects, features, and aspects will become apparent to those of ordinary skill in the art, upon reviewing the following description of specific, exemplary aspects in conjunction with the accompanying figures. While features maybe discussed relative to certain aspects and figures below, all aspects can include one or more of the advantageous features discussed herein. In other words, while one or more aspects may be discussed as having certain advantageous features, one or more of such features may also be used in accordance with the various aspects discussed herein. In similar fashion, while exemplary aspects may be discussed below as device, system, or method aspects it should be understood that such exemplary aspects can be implemented in various devices, systems, and methods.

## BRIEF DESCRIPTION OF THE DRAWINGS

FIG. 1 illustrates a simple method to determine a relative vector based on exchanging current positions of two road users.

FIG. 2 illustrates a method to determine a relative vector based on a new approach according to some aspects of the disclosure.

FIG. 3 illustrates a method to determine a relative vector based on a new approach according to some aspects of the disclosure.

FIG. 4 illustrates a method to determine a relative vector based on a new approach according to some aspects of the disclosure.

FIG. 5 illustrates a flow diagram of a method to determine a relative vector based on a new approach according to some aspects of the disclosure.

To facilitate understanding, identical reference numerals have been used, where possible, to designate identical elements that are common to the figures. It is contemplated that elements disclosed in one aspect may be beneficially utilized on other aspects without specific recitation.

## DETAILED DESCRIPTION

The detailed description set forth below, in connection with the appended drawings, is intended as a description of various configurations and is not intended to represent the only configurations in which the concepts described herein may be practiced. The detailed description includes specific details for the purpose of providing a thorough understanding of the various concepts. However, it will be apparent to those skilled in the art that these concepts may be practiced without these specific details. In some instances, well-known structures and components are shown in block diagram form in order to avoid obscuring such concepts.

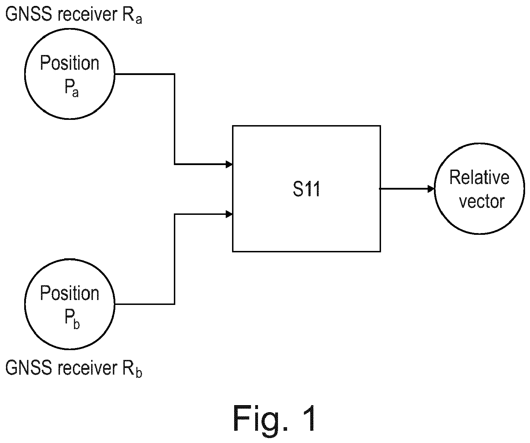

**Fig. 1** illustrates a simple method to determine a relative vector based on exchanging current positions of two road users. As shown in **Fig. 1,** a simple method to determine a relative position (i.e., a relative vector $v_{ab}$) between two road users **a** and **b** is to determine a difference between two current positions $P_a$ and $P_b$ of the two road users **a** and **b,** shown as block S11. The current positions $P_a$ and $P_b$ are determined by corresponding Global Navigation Satellite System (GNSS) receivers $R_a$ and $R_b$ based on positioning signals received from GNSS satellites.

In this approach, however, the GNSS receivers are considered as a black box because the internal algorithms are generally unknown. In addition, the positions calculated in the receivers might be improved by certain methods (e.g., by applying a Kalman filter). This distorts common errors between two road users, so that an additional error may be introduced in the estimated relative vector.

The present disclosure provides techniques to solve this problem by applying a new approach. In the new approach, instead of exchanging the determined current positions, sets of positioning data are exchanged between the road users.

In an aspect, the positioning data may comprise "raw data". Each GNSS satellite sends signals with a specific code which is different for each satellite. These codes for different GNSS satellites are known at a GNSS receiver. When a signal arrives at a GNSS receiver, the GNSS receiver calculates measurements (e.g., pseudorange measurements), which are referred to as "raw data".

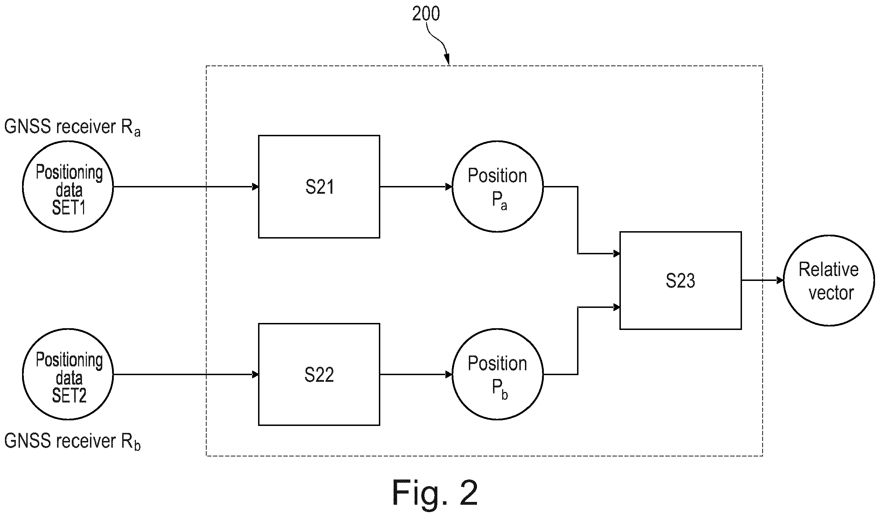

The techniques disclosed herein will be more understandable based on the description with reference to Fig. 2 - Fig. 5.

**Fig. 2** illustrates a method to determine a relative vector/relative position based on the new approach according to some aspects of the disclosure. For simplification, the method 200 shown in Fig. 2 only shows steps for determining a relative vector between two road users. However, the method can be extended to apply to any number of road users to determine relative vectors/relative positions between different pairs of road users.

Steps of the method 200 can be executed by a computing device (e.g., a processor, processing circuit, and/or other suitable component) or other suitable means for performing the steps.

As shown in Fig. 2, a device receives a set of positioning data (SET1) obtained by a GNSS receiver $R_a$ at the road user **a,** and receives a set of positioning data (SET2) for a road user **b** obtained by a GNSS receiver $R_b$ at the road user **b.**

At block S21, the device determines an estimated current position $P_a$ based on the positioning data of SET1.

At block S22, the device determines an estimated current position $P_b$ based on the positioning data of SET2.

Then, at block S23, the device determines a relative vector $v_{ab}$ (pointing from the road user **a** to the road user **b**) or a relative vector $v_{ba}$ (pointing from the road user **b** to the road user **a**) based on the determined estimated current positions $P_a$ and $P_b$.

In an aspect, the device for determining the relative vector can be located at the road user **a.**

In another aspect, the device for determining the relative vector can be located in a cloud system.

In another aspect, the positioning data may be exchanged via C2X communications, Wi-Fi, G5, G6 or any other new technologies.

In another aspect, the positioning data may include timestamp information. The timestamp information can be used to synchronize measurement data in the positioning data for different road users.

By using the new approach as shown in Fig. 2, it can be ensured that a same set of functions/algorithm are used at blocks S21 and S22 so that common errors in the estimated current positions $P_a$ and $P_b$ can be minimized.

Furthermore, by using the new approach as shown in Fig. 2, the set of functions/algorithm used at blocks S21 and S22 can be simplified to obtain less accurate estimated current positions $P_a$ and $P_b$. The set of functions/algorithm are simplified in such a way, that the errors caused by the simplification are similar in the estimated position $P_a$ and in the estimated position $P_b$. Thus, those errors in $P_a$ and $P_b$ can cancel each other out during the difference calculation at block S23.

In an aspect, errors associated with the positioning data obtained from the satellites can be categorized as common errors and non-common errors. Common errors can be corrected by using a same set of attributes for different road users. For example, satellite clock errors, orbit (ephemeris data) errors, errors caused by ionospheric delay, and errors caused by tropospheric delay can be seen as common errors. Non-common errors are associated with the specific GNSS receiver used or the location of the road user. For example, receiver clock errors and errors due to multipath effects can be seen as non-common errors.

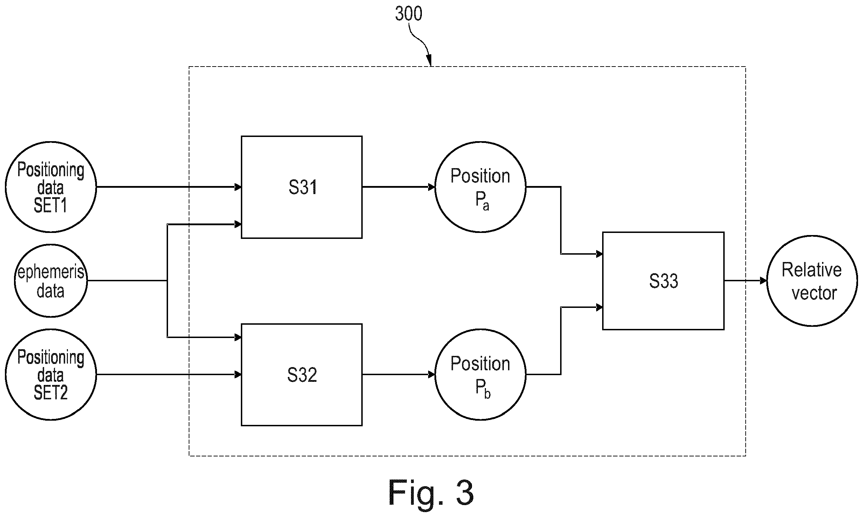

In the following, a more detailed example implementing the techniques disclosed herein will be explained with reference to Fig. 3.

**FIG. 3** illustrates a method to determine a relative vector based on the new approach according to some aspects of the disclosure. For simplification, the method 300 shown in Fig. 3 only shows steps for determining a relative vector/relative position between two road users. However, the method can be extended to apply to any number of road users to determine relative vectors and/or relative positions between different pairs of road users.

Steps of the method 300 can be executed by a computing device (e.g., a processor, processing circuit, and/or other suitable component) or other suitable means for performing the steps.

In Fig. 3, blocks S31, S32, S33 are similar as blocks S21, S22, S23 of Fig. 2.

Furthermore, as shown in Fig. 3, the device further receives ephemeris data for determining the estimated positions $P_a$ and $P_b$. The ephemeris data contains ephemeris information, which can be used to determine positions of the visible GNSS satellites.

At block S31, the device determines an estimated position $P_a$ based on the positioning data of SET1 and the ephemeris data.

At block S32, the device determines an estimated position $P_b$ based on the positioning data of SET2 and the ephemeris data.

This example can be used to understand another advantage of the new approach provided in the present disclosure. By using this new approach, it is possible to use a same set of ephemeris data at block S31 and at block S32. By using the same set of ephemeris data, errors in the ephemeris data may cause similar errors in the estimated positions $P_a$ and $P_b$, which may cancel each other out at block S33 during determination of the difference between $P_a$ and $P_b$.

Furthermore, by sharing the same set of ephemeris data, the set of ephemeris data only needs to be determined once, instead of being determined by each GNSS receiver individually.

In a further aspect, the ephemeris data is obtained by the GNSS receiver $R_a$ located at the road user **a.**

In a further aspect, the device may determine an ephemeris table based on the ephemeris data and uses the ephemeris table at block S31 and at block S32. The ephemeris table may contain satellite orbit information. The ephemeris table may further also contain a method for calculation of positions of the satellites. These satellite positions are used in block S31 and block S32.

In a further aspect, the position data may comprise timestamp information. The timestamp information may be used to determine a position on a given orbit.

In a further aspect, the device may generate a lookup table. When a satellite position is requested, the device may check if the position is already available for a specified timestamp. Otherwise, the device may calculate the position and store it (together with the timestamp) in the lookup table.

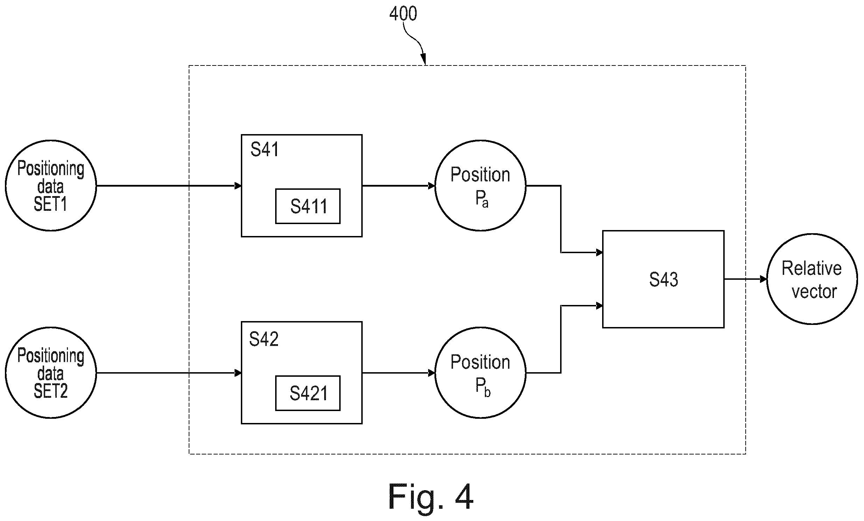

In the following, another more detailed example implementing the techniques disclosed herein will be explained with reference to Fig. 4.

FIG. 4 illustrates a method to determine a relative vector based on the new approach according to some aspects of the disclosure. For simplification, the method 400 shown in Fig. 4 only shows steps for determining a relative vector between two road users. However, the method can be extended to apply to any number of road users to determine relative vectors and/or relative positions between different pairs of road users.

Steps of the method 400 can be executed by a computing device (e.g., a processor, processing circuit, and/or other suitable component) or other suitable means for performing the steps.

In Fig. 4, blocks S41, S42, S43 are similar as blocks S21, S22, S23 of Fig. 2, and also similar as blocks S31, S32, S33 of Fig. 3.

Furthermore, as shown in Fig. 4, block S41 includes a step S411 and block S42 includes a step S421.

At step S411, the device applies an error correcting function to correct errors contained in the positioning data of SET1.

At step S421, the device applies an error correcting function to correct errors contained in the positioning data of SET2.

This example can be used to understand a further advantage of the new approach provided in the present disclosure. By using this new approach, it is possible to use a same error correcting function at step S411 and at step S421. By using the same error correcting function at step S411 and at step S421, it is possible to use a simplified error correcting function. The error correcting function can be simplified in such a way, that the errors caused by the simplification are similar in the estimated position $P_a$ and in the estimated position $P_b$. Thus, those errors in $P_a$ and $P_b$ may cancel each other out during the difference calculation at step S43.

As explained above, errors associated with the positioning data obtained by the GNSS receivers can be categorized as common errors and non-common errors.

In one aspect, the error correcting function can be simplified by not including attributes to correct common errors. For example, the error correcting function can be simplified by not including attributes to correct errors caused by ionospheric delay and/or errors caused by tropospheric delay.

In a further aspect, if the positing data SET1 and SET2 are obtained from a same group of satellites, the satellite clock errors can be seen as common errors. In this case, the error correcting function can be further simplified by not including attributes to correct the satellite clock errors.

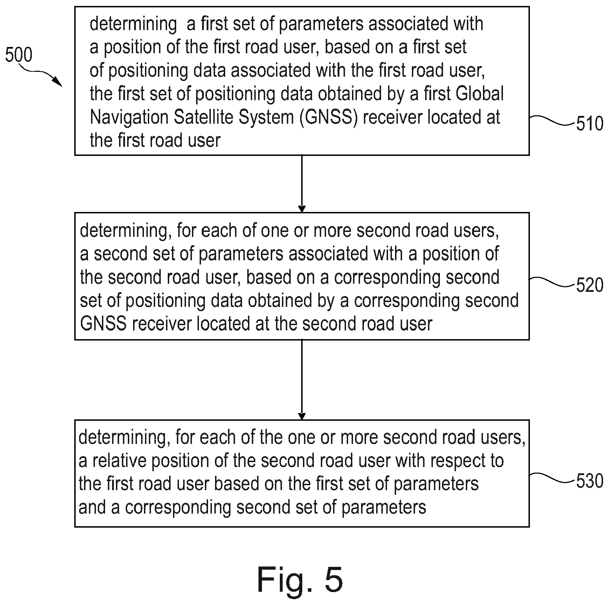

Fig. 5 illustrates a flow diagram of a method to determine a relative vector based on the new approach according to some aspects of the disclosure. Steps of the method 500 can be executed by a computing device (e.g., a processor, processing circuit, and/or other suitable component) or other suitable means for performing the steps. As illustrated, the method 500 includes a number of enumerated steps, but aspects of the method 500 may include additional steps before, after, and in between the enumerated steps.

At block 510, the device determines a first set of parameters associated with a position of the first road user, based on a first set of positioning data associated with the first road user. The first set of positioning data is obtained by a first Global Navigation Satellite System (GNSS) receiver located at the first road user. Here, block 510 can implement similar techniques implemented at block S21 of Fig. 2, block S31 of Fig. 3, and/or block S41 of Fig. 4.

At block 520, the device determines, for each of one or more second road users, a second set of parameters associated with a position of the second road user, based on a corresponding second set of positioning data obtained by a corresponding second GNSS receiver located at the second road user. Here, block 520 can implement similar techniques implemented at block S22 of Fig. 2, block S32 of Fig. 3 and/or block S42 of Fig. 4.

At block 530, the device determines, for each of the one or more second road users, a relative position of the second road user with respect to the first road user based on the first set of parameters and a corresponding second set of parameters. Here, block 530 can implement similar techniques implemented at block S23 of Fig. 2, block S33 of Fig. 3 and/or block S43 of Fig. 4.

In an aspect, the first set of parameters associated with the position of the first road user may represent a first estimated position associated with the first road user, and the second set of parameters associated with the position of the second road user may represent a second estimated position associated with the second road user.

In a further aspect, the block 510 may comprise applying a set of functions to the first set of positioning data, and the block 520 may comprise applying the same set of functions to the second set of positioning data.

In a further aspect, the method 500 may comprise determining an error correction function to correct different types of errors associated with the positioning data in the first set of positioning data and the second set of positioning data, wherein the set of functions may include the error correction function.

In a further aspect, the different types of errors to be corrected by the error correction function may not include satellite clock errors, errors introduced by ionospheric delay, and/or errors introduced by tropospheric delay.

In a further aspect, the block 530 may comprise determining a difference between the first set of parameters and the second set of parameters.

In a further aspect, the method 500 may comprise determining a set of ephemeris parameters based on navigation data, wherein the step of determining the first set of parameters and the step of determining the second set of parameters are further based on the set of ephemeris parameters. The navigation data may be obtained by the first GNSS receiver.

In a further aspect, the positioning data may comprise pseudorange measurement data.

In a further aspect, the positioning data may comprise timestamp information.

In a further aspect, the method 500 may comprises, for each of one or more second road users, determining a distance between the first road user and the corresponding second road user, based on the determined relative position. Moreover, the method 500 may further comprise, for each of one or more second road users, sending a warning signal to the first road user and/or the corresponding second road user, if the distance is below a threshold distance.

Furthermore, the new approach according to the present disclosure has an advantage over the PRDD-based approach. The PRDD-based approach determines a relative position based on pseudorange double differences (PRDDs) and using a least squares method. A drawback of the PRDD-based approach is that, only positioning data from a group of common satellites (i.e., jointly visible to two road users) can be used in the determination of the PRDDs and the subsequent determination of the relative vector.

By using the new approach according to the present disclosure, it is possible to use positioning data SET1 from a first group of satellites visible to the road user a, and use positioning data SET2 from a second group of satellites visible to the road user **b.** Here, the first group of satellites and the second group of satellites can have different number of satellites. This is particularly advantageous, for example in a case where road user **a** is a vehicle equipped with a low-cost GNSS receiver, and the road user **b** is an infrastructure unit (e.g., an RSU) located at a place with an optimal visibility to the sky so that more satellites are visible to the infrastructure unit. Moreover, locating the infrastructure unit at a place with an optimal visibility to the sky can reduce errors caused by multipath effects in the received positioning data.

In this case, the number of satellites can be maximized for the infrastructure unit. This results in an improved estimated position $P_b$ for the infrastructure unit, which can lead to a more accurate relative vector/relative position estimation between the vehicle and the infrastructure unit.

Furthermore, a known precise position of the infrastructure unit can be used to obtain a more accurate estimation of the position of the vehicle. For example, the more accurate estimation of the position of the vehicle can be obtained based on a relative position (determined based on the new approach disclosed herein) and the known precise position of the infrastructure unit.

In a further aspect, well-known filter techniques (e.g., Kalman filter) and/or multi sensor fusion techniques can be applied at blocks S21, S22 of Fig. 2, at blocks S31, S32 of Fig. 3, at blocks S41, S42 of Fig. 4, and/or at blocks 510, 520 of Fig. 5 to further improve the accuracy of the estimated relative vector/relative position.

In the following, a more detailed example will be explained to show how to simplify the error correcting function to not include attributes to correct errors caused by ionospheric delay and errors caused by tropospheric delay.

In general, a position for a road user can be obtained by solving the following equations

$$x_{iter} = (A^T A)^{-1} A^T b_{iter}$$

$$x_{new} = x_{old} + x_{iter}.$$

Here, **A** is a design matrix, **b** is a vector with pseudorange residuals for visible satellites (denoted as $s_1$, $s_2$, ... , $s_N$ in the following). By applying an iterative least squares method, the above equations can be solved to obtain an estimated position. $x_{old}$ is set to $(0,0,0,0)^T$ at the beginning (if the values are unknown). The solution $x_{new}$ is updated with $x_{iter}$ in each iteration until the length $| x_{iter} |$ becomes small enough (compared with a defined threshold value). $x_{new}$ contains the result of the iterative least squares method with the estimated position.

The design matrix **A** contains line of sight (LoS) unit vectors. For example, the design matrix **A** can be obtained as:

$$\mathbf{A} = \begin{bmatrix} -e_{a,x}^{s_1} & -e_{a,y}^{s_1} & -e_{a,z}^{s_1} & 1 \\ -e_{a,x}^{s_2} & -e_{a,y}^{s_2} & -e_{a,z}^{s_2} & 1 \\ \vdots & \vdots & \vdots & \vdots \\ -e_{a,x}^{s_N} & -e_{a,y}^{s_N} & -e_{a,z}^{s_N} & 1 \end{bmatrix}.$$

Here, the component **e** is a LoS unit vector for the visible/used satellites.

For example, a LoS unit vector $e_a^i$ can be determined as:

$$e_a^i = \frac{\boldsymbol{P}^i - \boldsymbol{P}_a}{|\boldsymbol{P}^i - \boldsymbol{P}_a|}.$$

Here, $\boldsymbol{P}_a$ is a position of road user **a** in Earth-centered, Earth-fixed (ECEF) coordinates (x, y, z), and $\boldsymbol{P}^i$ is a position of satellite i in ECEF coordinates (x,y,z).

The vector **b** represents pseudorange residuals for visible satellites and contains a list of components $b_a^i$ , which can be determined as:

$$b_a^i = p_a^i - r_a^i + c\delta t_u - c\delta t_s - I_a^i - T_a^i - M_a^i - N_a^i.$$

Here, $p_a^i$ is a pseudorange measurement for the road user **a** and satellite **i**, $r_a^i$ is a geometric distance between the road user **a** and satellite **i** (calculated by using $\boldsymbol{P}_a$ and $\boldsymbol{P}^i$), $c\delta t_u$ represents an offset due to receiver clock error, $c\delta t_s$ represents an offset due to satellite clock error, $I_a^i$ represents an offset due to ionospheric effects, $T_a^i$ represents an offset due to tropospheric effects, $M_a^i$ represents an offset due to multipath effects, and $N_a^i$ represents an offset due to non-modelled errors.

By applying the techniques disclosed herein, the determination of the components $b_a^i$ can be simplified as:

$$b_a^i = p_a^i - r_a^i + c\delta t_u - c\delta t_s - M_a^i - N_a^i.$$

As can been seen, the simplified version removes the attributes $I_a^i$ (representing an offset due to ionospheric effects) and $T_a^i$ (representing an offset due to tropospheric effects).

Since the attributes $I_a^i$ (representing an offset due to ionospheric effects) and $T_a^i$ (representing an offset due to tropospheric effects) may introduce similar errors in the estimated positions for the road user **a** and road user **b,** those errors may cancel each other out when determining the difference between the estimated positions.

In this way, the method to determine the relative vector/relative position is improved to be more efficient.

It should be apparent that the teachings herein may be embodied in a wide variety of forms and that any specific structure, function, or both being disclosed herein is merely representative and not limiting. Based on the teachings herein one of an ordinary level of skill in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. For example, a method may be implemented as part of a system, device, apparatus, and/or as instructions stored on a computer readable medium for execution on a processor or computer. Furthermore, an aspect may comprise at least one element of a claim.

The various illustrative blocks and modules described in connection with the disclosure herein maybe implemented or performed with a general-purpose processor, a DSP, an ASIC, an FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described above can be implemented using software executed by a processor, hardware, firmware, hardwiring, or combinations of any of these. Features implementing functions may also be physically located at various positions, including being distributed such that portions of functions are implemented at different physical locations.

**Claims**

1. A computer-implemented method for localizing one or more road users, the method comprising:

   determining (510) a first set of parameters associated with a position of the first road user, based on a first set of positioning data associated with the first road user, the first set of positioning data obtained by a first Global Navigation Satellite System, GNSS, receiver located at the first road user;
   determining (520), for each of one or more second road users, a second set of parameters associated with a position of the second road user, based on a corresponding second set of positioning data obtained by a corresponding second GNSS receiver located at the second road user; and
   determining (530), for each of the one or more second road users, a relative position of the second road user with respect to the first road user based on the first set of parameters and a corresponding second set of parameters.

2. The method of the preceding claim, wherein the first set of parameters associated with the position of the first road user represents a first estimated position associated with the first road user, and the second set of parameters associated with the position of the second road user represents a second estimated position associated with the second road user.

3. The method of any one of the preceding claims, wherein the step of determining (510) the first set of parameters comprises applying a set of functions to the first set of positioning data, and the step of determining (520) the second set of parameters comprises applying the same set of functions to the second set of positioning data.

**4.** The method of the preceding claim, further comprising:

determining an error correction function to correct different types of errors associated with the positioning data in the first set of positioning data and the second set of positioning data,
wherein the set of functions includes the error correction function.

**5.** The method of the preceding claim, wherein the different types of errors to be corrected by the error correction function do not include satellite clock errors, errors introduced by ionospheric delay, and/or errors introduced by tropospheric delay.

**6.** The method of any one of the preceding claims, wherein the step of determining (530) the relative position of the second road user comprises determining a difference between the first set of parameters and the second set of parameters.

**7.** The method of any one of the preceding claims, further comprising:
determining a set of ephemeris parameters based on navigation data, wherein the step of determining the first set of parameters and the step of determining the second set of parameters are further based on the set of ephemeris parameters.

**8.** The method of the preceding claim, wherein the navigation data is obtained by the first GNSS receiver.

**9.** The method of any one of the preceding claims, wherein the positioning data comprises pseudorange measurement data.

**10.** The method of any one of the preceding claims, wherein the positioning data comprises timestamp information.

**11.** The method of any one of the preceding claims, further comprising:
for each of one or more second road users, determining a distance between the first road user and the corresponding second road user, based on the determined relative position.

**12.** The method of the preceding claim, further comprising:
for each of one or more second road users, sending a warning signal to the first road user and/or the corresponding second road user, if the distance is below a threshold distance.

**13.** An apparatus comprising means for performing the steps of any one of claims 1 to 12.

**14.** The apparatus of the preceding claim, wherein the apparatus is located at the first road user or in a cloud system.

**15.** A computer program comprising instructions which, when the program is executed by a computer, cause the computer to carry out the method of any of claims 1 to 12.

GNSS receiver $R_a$

Position $P_a$

Position $P_b$

GNSS receiver $R_b$

S11

Relative vector

# Fig. 1

GNSS receiver $R_a$

Positioning data SET1

S21

Position $P_a$

GNSS receiver $R_b$

Positioning data SET2

S22

Position $P_b$

S23

Relative vector

200

Fig. 2

Fig. 3

Fig. 4

EP 4 372 423 A1

500

determining a first set of parameters associated with a position of the first road user, based on a first set of positioning data associated with the first road user, the first set of positioning data obtained by a first Global Navigation Satellite System (GNSS) receiver located at the first road user — 510

determining, for each of one or more second road users, a second set of parameters associated with a position of the second road user, based on a corresponding second set of positioning data obtained by a corresponding second GNSS receiver located at the second road user — 520

determining, for each of the one or more second road users, a relative position of the second road user with respect to the first road user based on the first set of parameters and a corresponding second set of parameters — 530

## Fig. 5

Europäisches
Patentamt

European
Patent Office

Office européen
des brevets

# EUROPEAN SEARCH REPORT

Application Number

EP 22 20 7563

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 757 317 A (BUCHLER ROBERT J [US] ET AL) 26 May 1998 (1998-05-26) * figures 1, 2 * * column 1, line 1 – column 6, line 14 * ----- | 1-15 | INV. G01S19/51 ADD. G01S19/14 |
| X | US 2017/162048 A1 (SUGIURA YASUNOBU [JP] ET AL) 8 June 2017 (2017-06-08) * figures 1-7 * * paragraph [0013] – paragraph [0022] * * paragraph [0032] – paragraph [0146] * ----- | 1-15 | |
| X | US 2002/032525 A1 (YOSHIKAWA SHOJI [JP] ET AL) 14 March 2002 (2002-03-14) * figures 1-7, 11, 12 * * paragraph [0001] – paragraph [0002] * * paragraph [0020] – paragraph [0022] * * paragraph [0037] – paragraph [0086] * * paragraph [0100] – paragraph [0118] * ----- | 1-15 | |
| X | US 2016/139274 A1 (MORIMOTO KAZUHIRO [JP] ET AL) 19 May 2016 (2016-05-19) * figures 1, 4, 6-8 * * paragraph [0006] – paragraph [0007] * * paragraph [0016] – paragraph [0049] * * paragraph [0070] – paragraph [0098] * * paragraph [0115] – paragraph [0146] * ----- | 1-15 | TECHNICAL FIELDS SEARCHED (IPC) G01S |

The present search report has been drawn up for all claims

| Place of search | Date of completion of the search | Examiner |
|---|---|---|
| Munich | 14 February 2023 | Krummenacker, Benoit |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 7563

This annex lists the patent family members relating to the patent documents cited in the above-mentioned European search report.
The members are as contained in the European Patent Office EDP file on
The European Patent Office is in no way liable for these particulars which are merely given for the purpose of information.

14-02-2023

| Patent document cited in search report | | Publication date | Patent family member(s) | | Publication date |
|---|---|---|---|---|---|
| US 5757317 | A | 26-05-1998 | NONE | | |
| US 2017162048 | A1 | 08-06-2017 | JP | 6493181 B2 | 03-04-2019 |
| | | | JP | 2017102035 A | 08-06-2017 |
| | | | US | 2017162048 A1 | 08-06-2017 |
| US 2002032525 | A1 | 14-03-2002 | JP | 3721964 B2 | 30-11-2005 |
| | | | JP | 2002090439 A | 27-03-2002 |
| | | | US | 2002032525 A1 | 14-03-2002 |
| US 2016139274 | A1 | 19-05-2016 | JP | 6137129 B2 | 31-05-2017 |
| | | | JP | 2016095643 A | 26-05-2016 |
| | | | US | 2016139274 A1 | 19-05-2016 |

EPO FORM P0459

For more details about this annex : see Official Journal of the European Patent Office, No. 12/82